Europäisches Patentamt

European Patent Office

Office européen des brevets

(11) Numéro de publication: **0 342 081**
A1

## (12) DEMANDE DE BREVET EUROPEEN

(21) Numéro de dépôt: **89401142.8**

(22) Date de dépôt: **21.04.89**

(51) Int. Cl.⁴: **F 16 B 9/02**
F 16 B 35/02, B 08 B 1/04

(30) Priorité: **21.04.88 FR 8805290**

(43) Date de publication de la demande:
**15.11.89 Bulletin 89/46**

(84) Etats contractants désignés:
**AT BE CH DE ES FR GB GR IT LI LU NL SE**

(71) Demandeur: **CREATION DE MECANISMES
D'AUTOMATISMES ET D'ASSERVISSEMENTS
123, rue de Petit Vaux
F-91360 EPINAY-SUR-ORGE (FR)**

(72) Inventeur: **Hanser, Patrick Edouard Lucien
22, rue des Camaldules
F-91330 Yerres (FR)**

(74) Mandataire: **Martin, Jean-Jacques et al
Cabinet REGIMBEAU 26, Avenue Kléber
F-75116 Paris (FR)**

(54) **Dispositif d'ancrage dans un alésage taraudé et machine de brossage incorporant un tel dispositif.**

(57) La présente invention concerne un dispositif d'ancrage rapide et amovible dans un alésage taraudé pour la fixation d'un accessoire, du type comprenant un corps support (10, 20), au moins deux mâchoires (30a, 30b) présentant sur leurs surfaces extérieures des secteurs de filets (34a, 34b) complémentaires du taraudage (2), et des moyens de commande (50, 60, 70) associés aux mâchoires (30a, 30b) pour déplacer alternativement celles-ci entre une position rétractée dans laquelle les mâchoires définissent en combinaison une enveloppe de section droite inférieure à la section libre de l'alésage (2) pour permettre d'insérer les mâchoires (30a, 30b) dans l'alésage taraudé et une position de travail en extension dans laquelle les mâchoires (30a, 30b) définissent en combinaison une enveloppe en forme de filetage complémentaire de l'alésage taraudé (2), pour assurer un ancrage des mâchoires dans ce dernier caractérisé par le fait que les mâchoires sont montées à pivotement sur le corps support, le corps support (20) est solidaire d'un fourreau (10) engagé dans un manchon (110) portant l'accessoire à fixer, et le fourreau (10) est pourvu d'une butée réglable (120) pour le manchon (110).

FIG_1

## Description

## DISPOSITIF D'ANCRAGE DANS UN ALESAGE TARAUDE ET MACHINE DE BROSSAGE INCORPORANT UN TEL DISPOSITIF.

La présente invention concerne un dispositif d'ancrage rapide et amovible dans un alésage taraudé, pour la fixation d'un accessoire.

La présente invention trouve application, notamment mais non exclusivement, dans la fixation de dispositifs de brossage pour plan de joint ou alésages taraudés d'orifices d'accès pour cuve.

La fixation des dispositifs de brossage en regard des orifices d'accès pour cuve, par exemple sur des générateurs de vapeur ou pressuriseurs de centrale nucléaire, a jusqu'ici été réalisée à l'aide de faux goujons, comme montré par exemple sur la figure 6 du document EP-A-O 247 928 au nom de la Demanderesse.

Toutefois, l'utilisation de faux goujons pour la fixation de machine à brosser ne donne pas pleinement satisfaction. D'une part, les faux goujons réalisés généralement en inox sont parfois sujet à grippage. D'autre part, lors du vissage ou dévissage de ces éventuels faux gougeons, l'opérateur est exposé trop longuement aux radiations.

On a proposé dans les documents US-A-2 570 618 et DE-A-1 195 093 des dispositifs d'ancrage comportant des mâchoires aptes à être déplacées entre une position rétractée et une position de travail en extension pour être ancrées dans un alésage taraudé. Les moyens décrits dans les documents précités ne sont cependant pas adaptés pour supporter de façon fiable et précise, des accessoires tels que des machines de brossage.

La présente invention a pour but de proposer un nouveau dispositif d'ancrage amovible permettant une opération rapide tant à l'installation qu'au retrait, adaptable aisément sur tout type d'alésage taraudé et conçu pour définir une position axiale et radiale précise de l'accessoire quel que soit le point d'origine du taraudage dans l'alésage.

On notera que l'installation et le retrait rapides des dispositifs est indispensable dans le cas d'intervention sur cuve de centrale nucléaire. Par ailleurs, le positionnemnet axial et radial précis de la machine à brosser est indispensable pour obtenir un brossage efficace, sans risque de détérioration de l'objet brossé.

Le but précité est atteint, selon la présente invention, grâce à un dispositif d'ancrage rapide et amovible comprenant :
- un corps support,
- au moins deux mâchoires présentant sur leurs surfaces extérieures des secteurs de filets complémentaires du taraudage, et
- des moyens de commande associés aux mâchoires pour déplacer alternativement celles-ci entre une position rétractée dans laquelle les mâchoires définissent en combinaison une enveloppe de section droite inférieure à la section libre de l'alésage pour permettre d'insérer les mâchoires dans l'alésage taraudé et une position de travail en extension dans laquelle les mâchoires définissent en combinaison une enveloppe en forme de filetage complémentaire de l'alésage taraudé, pour assurer un ancrage des mâchoires dans ce dernier caractérisé par le fait que :
- les mâchoires sont montées à pivotement sur le corps support,
- le corps support est solidaire d'un fourreau engagé dans un manchon portant l'accessoire à fixer, et
- le fourreau est pourvu d'une butée réglable pour le manchon.

Selon une caractéristique avantageuse de l'invention les moyens de commande comprennent un tiroir placé entre les mâchoires et fixé à une tige déplaçable en translation.

La présente invention concerne également une machine de brossage comprenant au moins un dispositif d'ancrage du type précité.

D'autres caractéristiques, buts et avantages de la présente invention apparaîtront à la lecture de la description détaillée qui va suivre, et en regard des dessins annexés donnés à titre d'exemple non limitatif et sur lesquels :
- la figure 1 représente une vue schématique, partiellement en coupe longitudinale, d'un dispositif d'ancrage conforme à la présente invention, et
- la figure 2 représente une vue schématique en coupe axiale longitudinale, selon un plan de coupe orthogonal, référencé II-II sur la figure 1, du même dispositif.

On a schématiquement illustré sur les figures annexées une paroi de cuve 1 présentant une surface extérieure 4 et munie d'un alésage taraudé borgne 2.

Le dispositif d'ancrage illustré sur les figures annexées comprend un fourreau support 10 centré sur un axe 12. Le fourreau définit un logement interne étagé 14. Une pièce support 20 est fixée rigidement sur une première extrémité 16 du fourreau support 10.

La pièce support 20 porte à pivotement deux mâchoires 30a, 30b. Les mâchoires 30a, 30b, sont symétriques par rapport au plan de coupe II-II passant par l'axe 12.

Les mâchoires 30a, 30b sont formées de lames planes, coplanaires qui s'étendent généralement parallèlement à l'axe 12. Les mâchoires 30a, 30b, sont guidées à pivotement sur la pièce support 20 par des tourillons 32a, 32b, dont les axes 33a, 33b, s'étendent parallèlement au plan de coupe II-II et transversalement à l'axe 12.

Les tourillons 32a, 32b, sont prévus au voisinage d'une première extrémité des mâchoires 30a, 30b. Cette première extrémité des mâchoires coopère avec des moyens de commande qui seront décrits plus en détail par la suite.

L'essentiel du corps des mâchoires 30a, 30b, s'étend vers l'extérieur du fourreau support 10 par rapport aux tourillons 32a, 32b.

La seconde extrémité des mâchoires 30a, 30b, qui est placée à l'extérieur du fourreau support 10, est destinée à être engagée dans l'alésage taraudé 2.

A cet effet, les mâchoires 30a, 30b, sont munies sur leur profil extérieur, de secteurs de filets 34a, 34b, complémentaires du taraudage de l'alésage 2.

Les moyens de commande précités destinés à déplacer les mâchoires 30a, 30b, entre une position rétractée et une position de travail en extension comprennent une tige 50, un tiroir 60 et un coulisseau 70.

La tige 50 est centrée sur l'axe 12.

Le tiroir 60 est fixé rigidement à une première extrémité 52 de la tige 50, adjacente à la première extrémité 16 du fourreau support 10. Le coulisseau 70 est fixé rigidement à la seconde extrémité 54 du fourreau support 10.

Le tiroir 60 est placé entre les mâchoires 30a, 30b. Il possède une lumière oblongue 62 dont le plan de symétrie coïncide avec le plan de coupe II-II passant par l'axe 12. Le tiroir 60 est ainsi guidé à translation parallèlement à l'axe 12 par un tenon 22 fixé sur la pièce support 20. L'axe 24 du tenon 22 s'étend transversalement à l'axe 12, dans le plan de coupe II-II. L'axe 24 est sécant de l'axe 12.

La seconde extrémité 54 de la tige 50 est guidée également à translation parallèlement à l'axe 12 par un palier cylindrique 18 prévu dans la seconde extrémité 17 du fourreau support 10.

Il résulte du guidage à translation parallèlement à l'axe 12 existant entre le tenon 22 et le tiroir 60, d'une part, et le palier 18 et la tige 50, d'autre part, que l'ensemble formé par la tige 50, le tiroir 60 et le coulisseau 70 possède une seule liberté de mouvement par rapport au fourreau 10, correspondant à une translation parallèlement à l'axe 12.

Le déplacement de cet ensemble le long de l'axe 12 est commandé par une came 80.

Cette came est supportée à pivotement au niveau de la seconde extrémité 17 du fourreau support 10.

Cette came comprend plus précisément un corps cylindrique 82 et deux tourillons 84, 86. Les tourillons 84, 86 sont coaxiaux entre eux, centrés sur un même axe 87. Cet axe 87 est parallèle à l'axe du corps 82, mais excentré par rapport à celui-ci. L'axe 87 s'étend transversalement à l'axe 12, en étant sécant de celui-ci, et parallèlement au plan de coupe II-II.

Le corps 82 est placé dans une lumière oblongue 72 ménagée dans le coulisseau 70.

La plus petite dimension ou largeur de la lumière 72 est complémentaire du diamètre externe du corps 82 et s'étend parallèlement à l'axe 12. La plus grande dimension de la lumière 72 s'étend perpendiculairement au plan de coupe II-II.

L'homme de l'art comprendra aisément que ainsi la rotation de la came 80 autour de l'axe 87 entraîne le déplacement à translation de l'ensemble formé par la tige 50, le tiroir 60 et le coulisseau 70, en raison de l'excentrement existant entre le corps 82 et les tourillons d'articulation 84, 86 et de l'engagement du corps 82, dans la lumière 72 du coulisseau 70.

Pour assurer la rotation de la came 80, de préférence, l'un des tourillons 84 est fixé rigidement sur un levier 88, s'étendant généralement radialement par rapport à l'axe 87.

Les tourillons 84, 86, peuvent être montés à rotation dans une chape prévue à la seconde extrémité 17 du fourreau support 10.

Selon le mode de réalisation illustré sur les figures annexées, pour faciliter l'installation de la came 80, l'un des tourillons 84 est guidé en rotation dans une toile 11 solidaire du fourreau support 10, tandis que le second tourillon 86 est guidé à rotation, coaxialement, dans une plaque 90 fixée sur le fourreau support 10 à l'aide de boulons 92, 94.

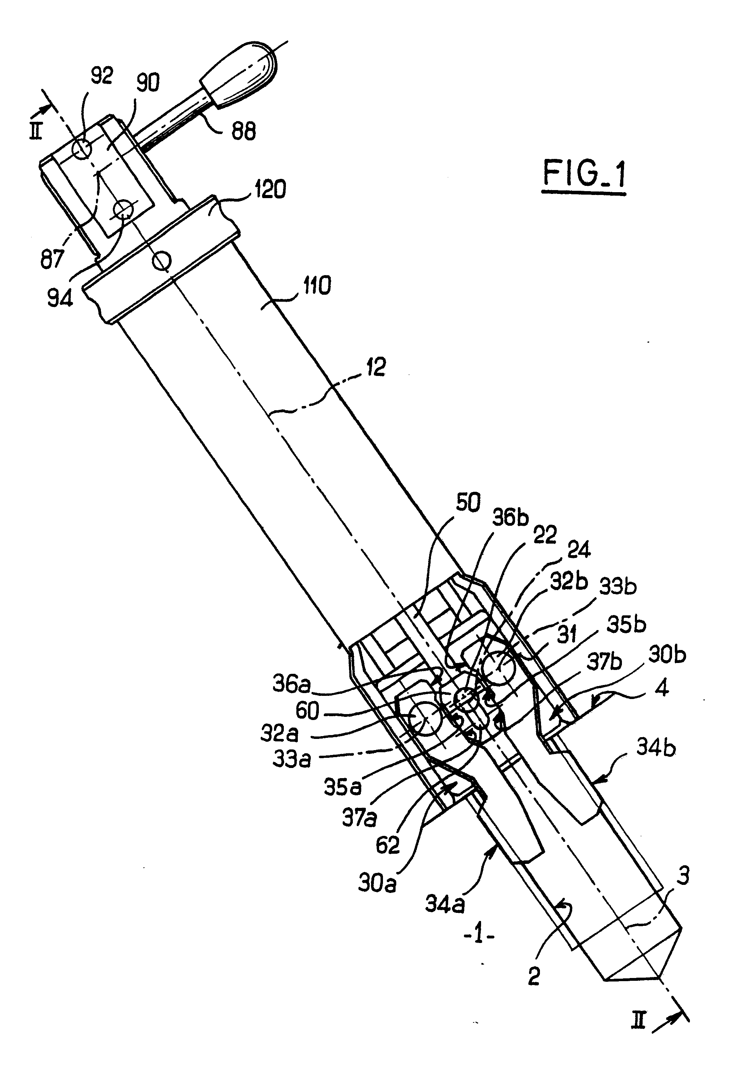

Comme illustré sur la figure 1, le tiroir 60, considéré dans un plan passant par l'axe 12 et perpendiculaire au plan de coupe II-II, présente un contour généralement rectangulaire à coins tronqués.

Le profil interne des mâchoires 30a, 30b, au niveau de l'extrémité des mâchoires pourvues des tourillons 32a, 32b, présente une symétrie générale par rapport à un plan 31 passant par les axes 33a, 33b, des tourillons, c'est-à-dire un plan perpendiculaire à l'axe 12.

Plus précisément, le profil interne de chacune des mâchoires 30a, 30b, au niveau de cette extrémité, est défini par une concavité 35a, 35b, dirigée vers le tenon central 22, et de part et d'autre de laquelle sont ménagées des surfaces de commande 36a, 36b, d'une part, et 37a, 37b, d'autre part.

Les surfaces 36a, 36b, ménagées sur les mâchoires 30a, 30b, sont placées vers l'intérieur du fourreau support 10 par rapport aux axes 33a, 33b, des tourillons 32a, 32b. Inversement les surfaces de commande 37a, 37b, des mâchoires 30a, 30b, sont prévues vers l'extérieur du fourreau support 10 par rapport aux axes 33a, 33b, des tourillons 32a, 32b.

Les surfaces de commande 36a, 37a, ménagées sur la mâchoire 30a sont de préférence planes et coplanaires. De même, de préférence, les surfaces de commande 36b, 37b, ménagées sur la mâchoire 30b sont planes et coplanaires entre elles.

La longueur du tiroir 60 (considérée parallèlement à l'axe 12) est telle que celui-ci n'attaque à un instant donné qu'une paire de surfaces de commande 36a, 36b ou 37a, 37b, quelle que soit sa position le long de l'axe 12. La largeur du tiroir 60 (considérée transversalement à l'axe 12 et au plan de coupe II-II) est telle que l'engagement du tiroir 60 et alternativement de l'une ou l'autre des paires de surfaces de commande 36a, 36b ou 37a, 37b provoque un pivotement des mâchoires.

L'homme de l'art comprendra aisément que lorsque le tiroir 60 attaque les surfaces de commande 36a, 36b, des mâchoires, il tend à rapprocher les extrémités externes des mâchoires 30a, 30b, pourvues des secteurs des filets 34a, 34b. Le tiroir 60 impose alors aux mâchoires 30a, 30b, une position rétractée dans laquelle les mâchoires définissent en combinaison une enveloppe de section droite inférieure à la section libre de l'alésage pour permettre d'insérer les mâchoires 30a, 30b, dans l'alésage taraudé 2.

Inversement lorsque le tiroir 60 attaque les surfaces de commande 37a, 37b, des mâchoires, il sollicite en éloignement les extrémités externes des mâchoires 30a, 30b pourvues des secteurs de filets 34a, 34b. Le tiroir de commande 60 impose alors aux mâchoires 30a, 30b, une position de travail en extension, telle qu'illustrée sur les figures annexées, dans laquelle les mâchoires définissent en combinaison une enveloppe en forme de filetage complémentaire de l'alésage taraudé 2. Cette position de travail en extension des mâchoires 30a, 30b, permet d'assurer un ancrage des mâchoires dans l'alésage 2.

De préférence, le dispositif d'ancrage conforme à la présente invention comprend des moyens aptes à solliciter élastiquement les mâchoires 30a, 30b, vers leur position de travail en extension.

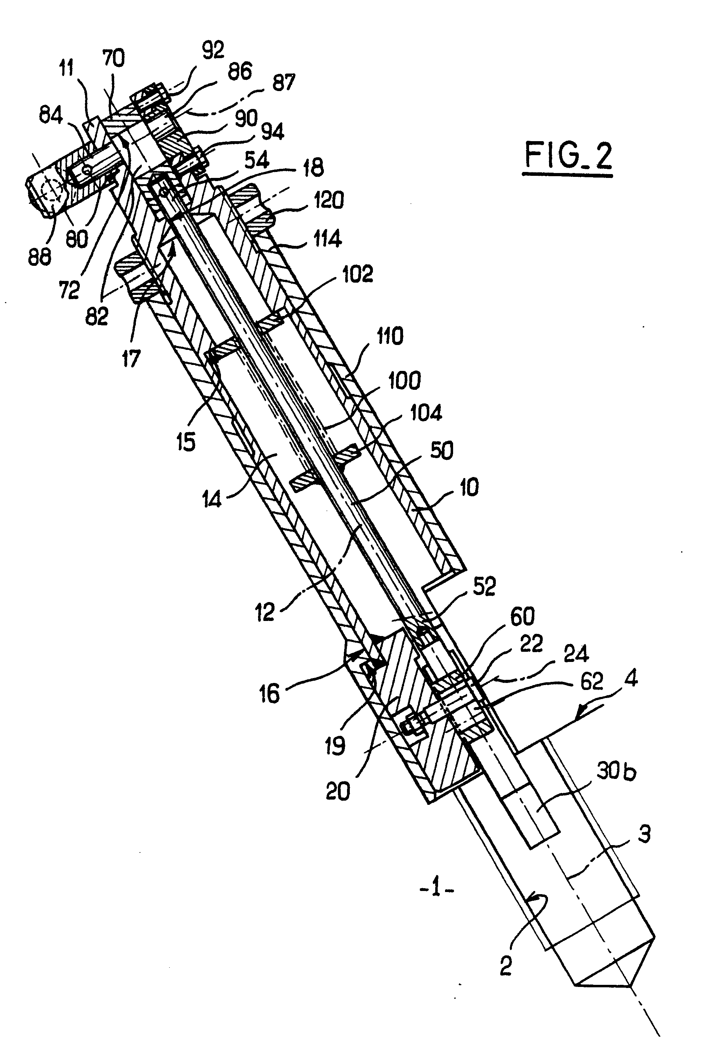

Selon le mode de réalisation illustré sur la figure 2 annexée, les moyens de sollicitation précités sont formés d'un ressort hélicoïdal 100, engagé sur la tige 50 et prenant appui sur deux rondelles 102, 104.

La rondelle 102 est elle-même engagée sur la tige 50, libre de translation parallèlement à l'axe 12. Elle repose contre un décrochement 15 en forme de couronne centrée sur l'axe 12, ménagé à l'intérieur de la chambre 14, et dirigé vers l'extrémité du fourreau support 10 pourvue de la pièce support 20.

La seconde rondelle 104 est fixée rigidement, par exemple par soudure, sur la tige 50.

Le fourreau support 10 est engagé libre de coulissement axial dans un manchon cylindrique 110. Le manchon 110 est centré sur l'axe 12.

Toutefois, le débattement axial du fourreau support 10 dans le manchon 110 est limité.

Selon le mode de réalisation illustré sur les figures annexées, la limitation du débattement axial du fourreau 10 par rapport au manchon 110 est obtenue dans un premier sens (correspondant au déplacement des mâchoires 30a, 30b, vers l'intérieur du manchon 110) par la pièce support 20 apte à venir en appui contre un décrochement homologue 19 ménagé sur le manchon 110. La limitation du débattement axial entre le fourreau support 10 et le manchon 110 dans le second sens (correspondant au déplacement des mâchoires 30a, 30b, vers l'extérieur du manchon 110) est obtenu par une butée réglable formée par une bague 120 engagée par filetage sur la seconde extrémité 17 du fourreau support 10 et venant reposer contre l'extrémité axiale associée 114 du manchon 110.

Le système destiné à être ancré en regard de la paroi 1, par exemple une machine de brossage, est fixé sur le manchon 110, ou plus précisément, de préférence, sur une pluralité de manchons 110 logeant chacun un fourreau support 10, des mâchoires 30a, 30b, et des moyens de commande 50, 60, 70, pour permettre l'ancrage du système, simultanément dans une pluralité d'alésages taraudés.

Le dispositif, tel qu'une machine de brossage, peut être fixé sur le manchon 110 à l'aide de tout moyen classique approprié, par exemple par soudure.

Pour réaliser l'ancrage et le retrait d'une machine de brossage à l'aide du dispositif conforme à la présente invention, on procède comme suit.

Le système équipé d'au moins un dispositif d'ancrage du type illustré sur les figures 1 et 2 est présenté en regard de la paroi 1, en alignant l'axe 12 de chaque dispositif d'ancrage avec l'axe 3 d'un alésage taraudé.

Le levier 88 est pivoté autour de l'axe 87 à l'encontre de la sollicitation du ressort 100 de sorte que le tiroir 60 prenne appui sur les surfaces de commande 36a, 36b, des mâchoires 30a, 30b.

Les mâchoires sont en position rétractée. Elles définissent en combinaison une enveloppe de section droite inférieure à la section libre de l'alésage 2. Les mâchoires 30a, 30b, peuvent être engagées dans un alésage 2, par déplacement du système contre la paroi 1 selon un mouvement parallèle aux axes 3. Le levier 88 est alors pivoté autour de l'axe 87 pour déplacer la tige 50 en rapprochement du fond de l'alésage taraudé 2. Le tiroir 60 vient alors solliciter les secondes surfaces de commande 37a, 37b, des mâchoires 30a, 30b. Il déplace celles-ci en position de travail en extension comme illustré sur la figure 1. Les mâchoires 30a, 30b, définissent alors en combinaison une enveloppe en forme de filetage complémentaire de l'alésage taraudé. L'ensemble formé par le fourreau support 10, la tige 50, le tiroir 60 et le coulisseau 70 est alors ancré dans l'alésage taraudé associé 2. La bague servant de butée 120 est par ailleurs pré-réglée en position sur le fourreau support 10 de sorte que les filets 340, 346 des mâchoires 30a, 30b soient alignés sur les filets complémentaires de l'alésage 2 lorsque la position d'ancrage est obtenue, c'est à dire lorsque le manchon cylindrique 110 portant le dispositif, (machine de brossage par exemple), est pincé entre, d'une part, la paroi 1, d'autre part la bague 120.

Grâce à ce réglage on obtient, lors de l'ancrage des mâchoires 30a, 30b dans le taraudage de l'alésage 2, une position axiale constante et précise de la machine à brosser -le manchon 110 reposant contre la surface extérieure 4 de la paroi 1- et un libre positionnement radial de la machine à brosser par rapport à l'axe 3 de l'alésage, quelle que soit la localisation du point d'origine du taraudage. Ce libre positionnement radial est indispensable lorsque la machine à brosser est équipée de plusieurs dispositifs d'ancrage.

L'homme de l'art comprendra aisément que l'ancrage dans l'alésage 2 est donc obtenu très rapidement, par simple pivotement du levier 88.

Le retrait du dispositif est tout aussi rapide, puisqu'il requiert uniquement le pivotement en sens inverse du levier 88.

Bien entendu la présente invention n'est pas limitée au mode de réalisation particulier qui vient d'être décrit mais s'étend à toutes variantes conformes à son esprit.

Par exemple, le dispositif d'ancrage conforme à la présente n'est pas limité à l'utilisation de deux mâchoires comme illustré sur la figure 1 mais peut comporter un nombre de mâchoires plus élevé, équi-réparties autour de l'axe 12.

## Revendications

1. Dispositif d'ancrage rapide et amovible dans un alésage taraudé pour la fixation d'un accessoire, du type comprenant :
-un corps support (10, 20),

-au moins deux mâchoires (30a, 30b) présentant sur leurs surfaces extérieures des secteurs de filets (34a, 34b) complémentaires du taraudage (2), et

-des moyens de commande (50, 60, 70) associés aux mâchoires (30a, 30b) pour déplacer alternativement celles-ci entre une position rétractée dans laquelle les mâchoires définissent en combinaison une enveloppe de section droite inférieure à la section libre de l'alésage (2) pour permettre d'insérer les mâchoires (30a, 30b) dans l'alésage taraudé et une position de travail en extension dans laquelle les mâchoires (30a, 30b) définissent en combinaison une enveloppe en forme de filetage complémentaire de l'alésage taraudé (2), pour assurer un ancrage des mâchoires dans ce dernier caractérisé par le fait que :

-les mâchoires sont montées à pivotement sur le corps support,

-le corps support (20) est solidaire d'un fourreau (10) engagé dans un manchon (110) portant l'accessoire à fixer, et

-le fourreau (10) est pourvu d'une butée réglable (120) pour le manchon (110).

**2.** Dispositif selon la revendication 1, caractérisé par le fait que les moyens de commande comprennent un tiroir (60) placé entre les mâchoires (30a, 30b) et fixé à une tige (50) déplaçable en translation.

**3.** Dispositif selon la revendication 2, caractérisé par le fait que le tiroir (60) est fixé à une première extrémité de la tige (50) déplaçable en translation et que cette même tige (50) est pourvue à sa seconde extrémité d'un coulisseau (70) déplaçable par une came excentrée (80).

**4.** Dispositif selon l'une des revendications 2 à 3, caractérisé par le fait que le tiroir (60) possède une lumière oblongue (52) recevant un tenon (22) pour assurer un guidage à translation du tiroir (60).

**5.** Dispositif selon l'une des revendications 2 à 4, caractérisé par le fait que chacune des mâchoires (30a, 30b) possède deux surfaces de commande (36a, 36b ; 37a, 37b) destinées à coopérer alternativement avec le tiroir (60), les surfaces de commande étant généralement parallèles à la direction de translation du tiroir (60) et symétriques par rapport à un plan passant par les axes (33a, 33b) de pivotement des mâchoires (30a, 30b).

**6.** Dispositif selon l'une des revendications 1 à 5, caractérisé par le fait qu'un moyen élastique (100) sollicite les mâchoires (30a, 30b) vers la position de travail en extension.

**7.** Dispositif selon l'une des revendications 1 à 6, caractérisé par le fait que la butée réglable (120) est formée d'une bague filetée engagée sur le fourreau (10).

**8.** Dispositif selon l'une des revendications 1 à 7, caractérisé par le fait que le débattement axial du fourreau (10) par rapport au manchon (110) est limité dans un premier sens par la pièce support (20) apte à venir en appui contre un décrochement homologue (19) ménagé dans le manchon (110), et dans l'autre sens, par la butée réglable (120).

**9.** Dispositif selon l'une des revendications 1 à 8, caractérisé par le fait qu'il comprend deux mâchoires (30a, 30b).

**10.** Machine de brossage, caractérisée par le fait qu'elle comprend au moins un dispositif d'ancrage conforme à l'une des revendications 1 à 9.

FIG_1

FIG_2

-1-

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | US-A-2 570 618 (WERNER)<br>* Colonne 1, ligne 35 - colonne 2, ligne 50; figures 1-4 *<br>--- | 1,2,6 | F 16 B 9/02<br>F 16 B 35/02<br>B 08 B 1/04 |
| A,D | DE-B-1 195 093 (AERPAT)<br>* Colonne 3, ligne 1 - colonne 4, ligne 10; figures 1-4 *<br>--- | 1,2,6 | |
| A | BE-A- 426 213 (DE VRIES)<br>* Figures 1,2 *<br>--- | 1,9 | |
| A | US-A-2 408 560 (KEEHN)<br>* Figures 1,3 *<br>--- | 3 | |
| D,A | EP-A-0 247 928 (C.M.A.A.)<br>* Figure 6, résumé *<br>----- | 10 | |

DOMAINES TECHNIQUES
RECHERCHES (Int. Cl.4)

B 08 B
B 25 B
F 16 B

Le présent rapport a été établi pour toutes les revendications

| Lieu de la recherche | Date d'achèvement de la recherche | Examinateur |
|---|---|---|
| LA HAYE | 17-08-1989 | VAN DER WAL W |